# EUROPEAN PATENT APPLICATION

(11) **EP 2 774 477 A1**
(43) Date of publication of application: **10.09.2014**
(21) Application number: 14150946.3
(22) Date of filing: 13.01.2014
(51) Int. Cl.: A01G 9/08

(54) **Machine for depositing soil in pots for plants**

(30) Priority: 06.03.2013 NL 2010403
(71) Applicant: Nobels Machinefabriek B.V., 2222 AV Katwijk (NL)
(72) Inventor: Van Nobelen, Hubertus Arnoldus, 2222 AV Katwijk (NL)
(74) Representative: Van Breda, Jacobus

(57) **Abstract**

Soil filling machine (1) for depositing soil in pots (3) for plants, comprising an infeed conveyor (2) for the pots (3) to a filling station (4) and an outfeed conveyor (5) for discharging the filled pots (3) from the filling station (4), wherein the filling station (4) comprises a rotary device (7) which is equipped to receive the pots (3) to be filled with soil, which rotary device (7) during operation moves the pots (3) in a continuous and uninterrupted motion from an input end (8) at which the pots (3) are received from the infeed conveyor (2) to a soil dosing unit (9), and from said soil dosing unit (9) to an output end (10) at which the pots (3) are discharged to the outfeed conveyor (5).

## Description

The invention relates to a soil filling machine for depositing soil in pots for plants, comprising an infeed conveyor for the pots to a filling station and an outfeed conveyor for discharging the filled pots from the filling station, wherein the filling station comprises a rotary device which is equipped to receive the pots to be filled with soil, which rotary device during operation moves the pots in a continuous and uninterrupted motion from an input end at which the pots are received from the infeed conveyor to a soil dosing unit, and from said soil dosing unit to an output end at which the pots are discharged to the outfeed conveyor.

Such a soil filling machine is known from WO2008/063053 and is used in practice to automatically fill pots for plants and to avoid manual labor which is costly and time-consuming. The continuously rotating rotary device ensures a high degree of efficiency and speed of operation in the process of filling the pots. It is particularly effective that any back-and-forth motion in the main operational stream of the machine is avoided, that is to say that the pots that are to be filled with soil move in a continuous and uninterrupted flow along the soil dosing unit where the pots receive their required amount of soil. There is however a need in practice to further improve the versatility of this automated process of filling pots for plants and to improve efficiency and speed of operation.

It is an object of the invention to address these needs, and in order to meet this object of the invention a soil filling machine is proposed in accordance with one or more of the appended claims.

In a first aspect of the invention, the rotary device comprises a bottom plate and an upper surface plate which are displaceable with respect to each other in order to select their mutual distance and accommodate said distance to the height of the pots that are to be received in apertures of the upper surface plate. This improves the versatility of use of the apparatus of the invention; reduces transition time when switching between seizes of pots to be filled with the machine, and hence increases speed of operation with this machine in comparison with prior art machines.

Another aspect is that the rotary device is arranged to receive the pots assembled in trays in apertures designed to the measures of the trays and arranged in an upper surface plate of the rotary device. This promotes that the process is well defined yet enables that variations are possible in the manner at which the pots are arranged in the trays. Without compromising the efficiency of the process, this enables that a large variation in the assembly of pots as comprised in the trays can be dealt with by the invented machine.

It has been found effective that the soil dosing unit is provided with a chute comprising downwards converging sidewalls at the bottom of which an opening is provided, and that next to said opening and downstream thereof as viewed in the rotational direction of the rotary device, a rotatable soil scraper ensures a controlled supply of soil from the chute into the pots.

For a clean and waste preventing operation of the machine it is desirable that downstream of the soil dosing unit the rotary device is provided with brush means to remove excess soil from the tops of the pots. The brushed away soil can easily be collected and returned to the chute from which the pots are supplied with soil. It is remarked that in its normal operation the trays with the pots are covered with a plate having openings at the location of the pots. Evidently such a plate promotes the clean operation of the machine by preventing that soil comes between the pots.

The swift and smooth operation of the machine is promoted by arranging that at the input end at which the pots are received from the infeed conveyor, a first arms and legs mechanism is provided to move the pots that are assembled in trays, collectively and attuned to the movement of the rotary device from the infeed conveyor into an aperture in the upper surface plate of the rotary device. Preferably this arms and legs mechanism is driven by the drive mechanism of the rotary device. This is the easiest way to ensure synchronism between the rotary device and the arms and legs mechanism.

Likewise it is preferred that at the output end at which the pots are discharged from the rotary device to the outfeed conveyor, a second arms and legs mechanism is provided to move the pots that are assembled in trays and placed in an aperture in the upper surface plate of the rotary device, collectively and attuned to the movement of the rotary device towards and onto the outfeed conveyor. Also this second arms and legs mechanism is preferably driven by the drive mechanism of the rotary device.

The invention will hereinafter be further elucidated with reference to the drawing of an exemplary embodiment of a soil filling machine according to the invention, which is not limiting as to the appended claims.

In the drawing:
- figure 1 provides a top view of the soil filling machine according to the invention;
- figure 2 shows a isometric view of the soil filling machine of figure 1;
- figure 3 shows a detail of the soil dosing unit; and
- figure 4 shows a part of the soil filling machine to show the operation of the first arms and legs mechanism at the entry section of the rotary device.

Whenever in the figures the same reference numerals are applied, these numerals refer to the same parts.

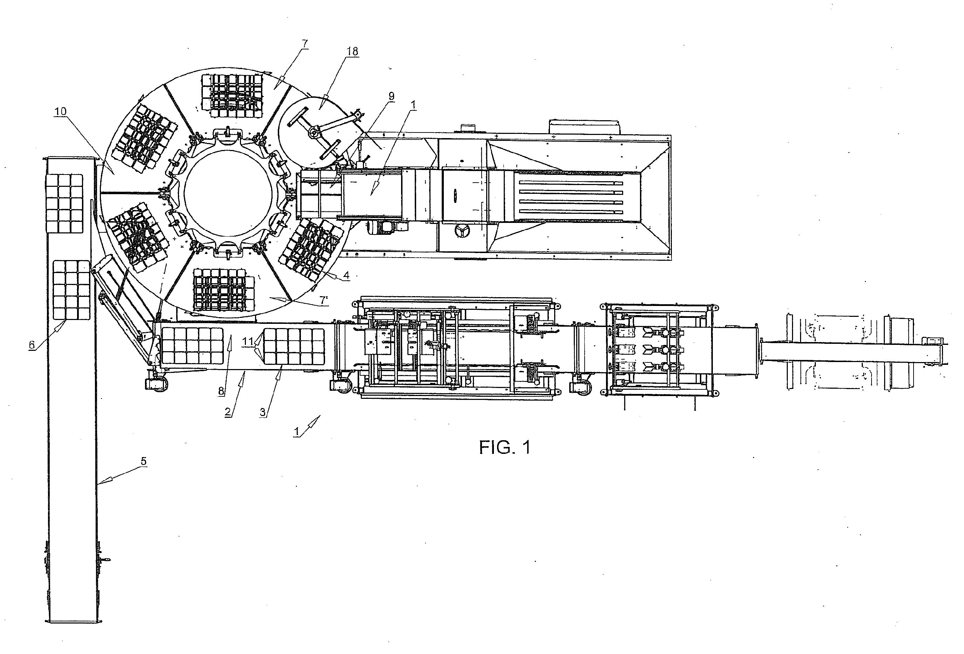

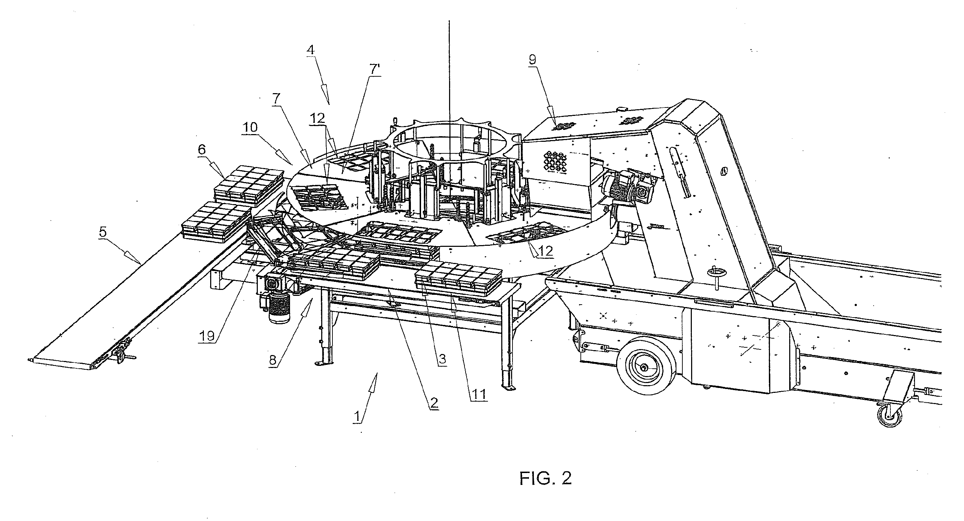

With reference to the top view and the isometric view of the soil filling machine generally denoted with reference 1 shown in figures 1 and 2 respectively, this machine 1 comprises an infeed conveyor 2 for the pots 3 to transport these pots to a filling station 4, and it comprises an outfeed conveyor 5 for discharging the filled pots 6 from the filling station 4.

The filling station 4 essentially comprises a rotary device 7 which is equipped to receive the pots 3 to be filled with soil, which rotary device 7 during operation moves the pots 3 in a continuous and uninterrupted motion from an input end 8 at which the pots 3 are received from the infeed conveyor 2 to a soil dosing unit 9, and from said soil dosing unit 9 to an output end 10 at which the pots are discharged to the outfeed conveyor 5. The continuously rotating rotary device 7 ensures a high degree of efficiency and speed of operation in the process of filling the pots 3.

The rotary device 7 is arranged to receive the pots which are assembled in trays 11 as is clearly shown in figure 1 and figure 2. The trays 11 of pots 3 are received in apertures 12 -as can be best seen in figure 2- which apertures are designed to the measures of the trays 11 and arranged in an upper surface plate 7' of the rotary device 7. This promotes that the process is well defined yet enables that variations are possible in the manner at which the pots 3 are arranged in the trays 11.

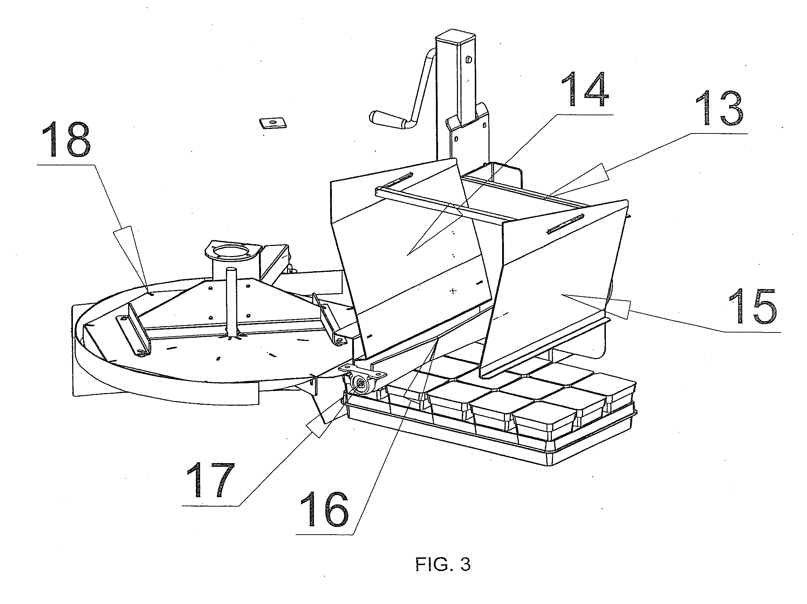

The detail view of figure 3 shows that the soil dosing unit 9 is provided with a chute 13 shaped by downwards converging sidewalls 14, 15 at the bottom of which chute 13 an opening 16 is provided, and that next to said opening 16 and downstream thereof as viewed in the rotational direction of the rotary device 7 a rotatable soil scraper 17 ensures a controlled supply of soil from the chute 13 into the pots 3 moving through along and under the opening 16 of the chute 13.

With reference again to figure 1 it is shown that for a clean and waste preventing operation of the machine 1, downstream of the soil dosing unit 9 the rotary device 7 is provided with brush means 18 to remove excess soil from the tops of the pots 3. The brushed away soil can in a manner known to the skilled person and therefore not shown in the figure, be collected and returned to the chute 13 from which the pots 3 are supplied with soil. Also not shown in the figure is that in its normal operation the trays 11 with the pots 3 are covered with a plate having openings at the location of the pots 3 so as to promote the clean operation of the machine by preventing that soil comes between the pots 3.

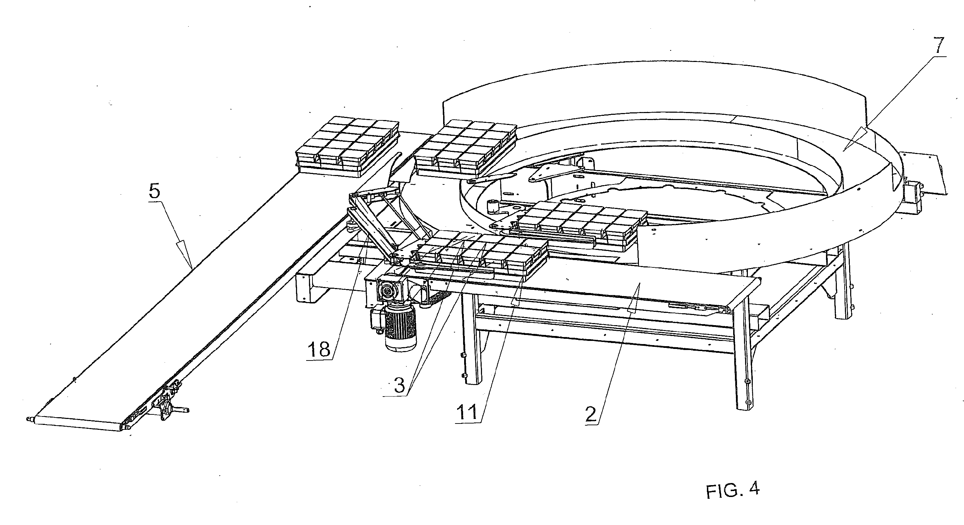

Figure 2 and in particular figure 4 show that at the input end 8 at which the pots 3 are received from the infeed conveyor 2, a first arms and legs mechanism 19 is provided to move the pots 3 that are assembled in trays 11, collectively and attuned to the movement of the rotary device 7 from the infeed conveyor 2 into an aperture in the upper surface plate 7' of the rotary device 7. This arms and legs mechanism 18 is suitably driven by the (not shown) drive mechanism of the rotary device 7. This ensures synchronism between the rotary device 7 and the arms and legs mechanism 18.

Similarly -and therefore not shown in figure 4- at the output end at which the pots are discharged from the rotary device 7 to the outfeed conveyor 5, a second arms and legs mechanism is provided to move the pots that are assembled in trays and placed in an aperture in the upper surface plate 7' of the rotary device 7, collectively and attuned to the movement of the rotary device 7 towards and onto the outfeed conveyor 5. Also this second arms and legs mechanism is suitably driven by the drive mechanism of the rotary device 7.

Further with reference to figure 2 the soil filling machine 1 of the invention is embodied such that the rotary device 7 comprises below the upper surface plate 7' a bottom plate, which plates are displaceable with respect to each other in order to select their mutual distance and accommodate said distance to the height of the pots 3 that are to be received in the apertures 12 of the upper surface plate 7'.

## Claims

1. Soil filling machine (1) for depositing soil in pots (3) for plants, comprising an infeed conveyor (2) for the pots (3) to a filling station (4) and an outfeed conveyor (5) for discharging the filled pots (6) from the filling station (4), wherein the filling station (4) comprises a rotary device (7) which is equipped to receive the pots (3) to be filled with soil, which rotary device (7) during operation moves the pots (3) in a continuous and uninterrupted motion from an input end (8) at which the pots (3) are received from the infeed conveyor (2) to a soil dosing unit (9), and from said soil dosing unit (9) to an output end (10) at which the pots are discharged to the outfeed conveyor (5), **characterized in that** the rotary device (7) comprises a bottom plate and an upper surface plate (7') which are displaceable with respect to each other in order to select their mutual distance and accommodate said distance to the height of the pots (3) that are to be received in apertures (12) of the upper surface plate (7').

2. Soil filling machine (1) according to claim 1, **characterized in that** the rotary device (7) is arranged to receive the pots (3) assembled in trays (11) in apertures (12) designed to the measures of the trays (11) and arranged in an upper surface-plate (7') of the rotary device (7).

3. Soil filling machine (1) according to claim 1 or 2, **characterized in that** the soil dosing unit (9) is provided with a chute (13) comprising downwards converging sidewalls (14, 15) at the bottom of which an opening (16) is provided, and that next to said opening (16) and downstream thereof as viewed in the rotational direction of the rotary device (7) a rotatable soil scraper (17) ensures a controlled supply of soil from the chute (13) into the pots (3).

4. Soil filling machine (1) according to any one of the previous claims 1-3, **characterized in that** downstream of the soil dosing unit (9) the rotary device (7) is provided with brush means (18) to remove excess soil from the tops of the pots (3).

5. Soil filling machine (1) according to any one of the previous claims 1-4, **characterized in that** at the input end (8) at which the pots (3) are received from the infeed conveyor (2), a first arms and legs mechanism (19) is provided to move the pots (3) that are assembled in trays (11), collectively and attuned to the movement of the rotary device (7) from the infeed conveyor (2) into an aperture (12) in the upper surface plate (7') of the rotary device (7).

6. Soil filling machine (1) according to any one of the previous claims 1-5, **characterized in that** at the output end (10) at which the pots (6) are discharged from the rotary device (7) to the outfeed conveyor (5) a second arms and legs mechanism is provided to move the pots (6) that are assembled in trays and placed in an aperture (12) in the upper surface plate (7') of the rotary device (7), collectively and attuned to the movement of the rotary device (7) towards and onto the outfeed conveyor (5).
